# EUROPEAN PATENT APPLICATION

(11) **EP 4 557 093 A1**
(43) Date of publication of application: **21.05.2025**
(21) Application number: 23275162.8
(22) Date of filing: 16.11.2023
(51) Int. Cl.: G06F 9/46

(54) **WORKFLOW MANAGEMENT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A workflow management system and method are described. The system may comprise a plurality of nodes, each configured to initiate and control one or more workflows. Each node comprises a service advertiser module for communicating services that are available to the node, a workflow receiver module for receiving one or more workflow requests, a route optimiser configured to generate a services mapping based in response to a workflow definition, and a network router configured to provide workflow activity messages to other nodes of the communication system across a network communications link.

## Description

### FIELD

The present invention relates to workflow management in communication systems.

### BACKGROUND

A communication system may include a plurality of nodes. A workflow consisting of a machine-readable sequence of steps for processing can be implemented within such a communication system.

Arrangements are needed for implementing and controlling workflows within such a system, in particular within a communication system that may be unreliable or a system in which new nodes may become available from time-to-time.

### SUMMARY

According to a first aspect, the specification describes a node of a communication system (e.g. an edge device of the communication system), wherein the node is configured to initiate and control one or more workflows, wherein the communication system comprises a plurality of nodes for implementing said workflows, said node comprising: a service advertiser module for communicating, to the network (e.g. to other nodes of the network), services that are available to the node, where each service is configured to implement computation steps suitable for implementing a task; a workflow receiver module for receiving one or more workflow requests, wherein each workflow comprises an ordered sequence of steps for processing; a route optimiser configured to generate a services mapping based in response to a workflow definition, wherein the services mapping is dependent on the services available on the nodes of the communication system; and a network router configured to provide workflow activity messages to other nodes of the communication system across a network communications link.

An interface may be provided between the node and one or more of the services available to the node.

The workflow receiver module may be configured to receive one or more workflow requests from a user. Alternatively, or in addition, the workflow receiver module may be configured to receive one or more workflow requests communicated by other nodes of the communication system. The one or more workflow requests may be broadcast or multi-cast.

The service advertiser module may additionally communicate properties or characteristics of the services that are available to the node. Alternatively, or in addition, the service advertiser module may be configured to communicate information relating to the services that are available to the node together with another communication from the node to the network.

The node may further comprise a state process manager configured to manage a state of each of one or more workflow messages being executed by the node, wherein said messages are handled in priority order.

The node may further comprise a workflow scheduler, wherein said workflow defines a start time and/or a repeat time of a workflow.

A statistics engine may be provided for gathering performance and/or usage statistics regarding said node and/or said communication system. The said route optimiser uses said statistics.

The network may be an ad-hoc network.

According to a second aspect, this specification describes a communication system comprising a plurality of nodes, each node as set out above with reference to the first aspect.

According to a third aspect, this specification describes a method comprising: receiving one or more workflow requests at a node of a communication system, wherein the node is configured to initiate and control one or more workflows, wherein the communication system comprising a plurality of nodes for implementing said workflows, and wherein each workflow comprises an ordered sequence of steps for processing; communicating, to the network, services that are available to the node, where each service is configured to implement computation steps suitable for implementing a task; generating a services mapping in response to a workflow definition, wherein the services mapping is dependent on the services available on the nodes of the communication system; and providing workflow activity messages to other nodes of the communication system across a network communications link.

The workflow receiver module may receive one or more workflow requests from a user. Alternatively, or in addition, the workflow receiver module may receive one or more workflow requests communicated by other nodes of the communication system. The one or more workflow requests may be broadcast or multi-cast.

The service advertiser module may additionally communicate properties or characteristics of the services that are available to the node.

The method may further comprise communicating information relating to the services that are available to the node together with another communication from the node to the network.

The messages may be handled in a priority order.

A start time and/or a repeat time of a workflow may be defined.

The method may further comprise gathering performance and/or usage statistics regarding said node and/or said communication system. The said route optimiser may use said statistics.

In a fourth aspect, this specification describes computer-readable instructions which, when executed by a computing apparatus, cause the computing apparatus to perform (at least) any method as described herein (including the method of the third aspect described above).

In a fifth aspect, this specification describes a computer-readable medium (such as a non-transitory computer-readable medium) comprising program instructions stored thereon for performing (at least) any method as described herein (including the method of the third aspect described above).

In a sixth aspect, this specification describes an apparatus comprising: at least one processor; and at least one memory including computer program code which, when executed by the at least one processor, causes the apparatus to perform (at least) any method as described herein (including the method of the third aspect described above).

### BRIEF DESCRIPTION OF THE FIGURES

Embodiments of the invention will now be described by way of example only with reference to the figures, in which:
Figure 1 shows a block diagram of a communications node in accordance with an example embodiment;
Figure 2 shows a block diagram of a communications system in accordance with an example embodiment;
Figure 3 is a flow chart showing an algorithm in accordance with an example embodiment;
Figure 4 shows a block diagram of a communications system in accordance with an example embodiment;
Figure 5 shows a block diagram of a communications node in accordance with an example embodiment;
Figure 6 shows a block diagram of a communications node in accordance with an example embodiment;
Figure 7 is a flow chart showing an algorithm in accordance with an example embodiment;
Figure 8 shows a block diagram of a communications node in accordance with an example embodiment;
Figure 9 shows a block diagram of a communications system in accordance with an example embodiment;
Figure 10 shows a block diagram of a communications node in accordance with an example embodiment;
Figure 11 shows a block diagram of a system in accordance with an example embodiment; and
Figure 12 shows a memory and processor that can be used in implementations of example embodiments.

### DETAILED DESCRIPTION

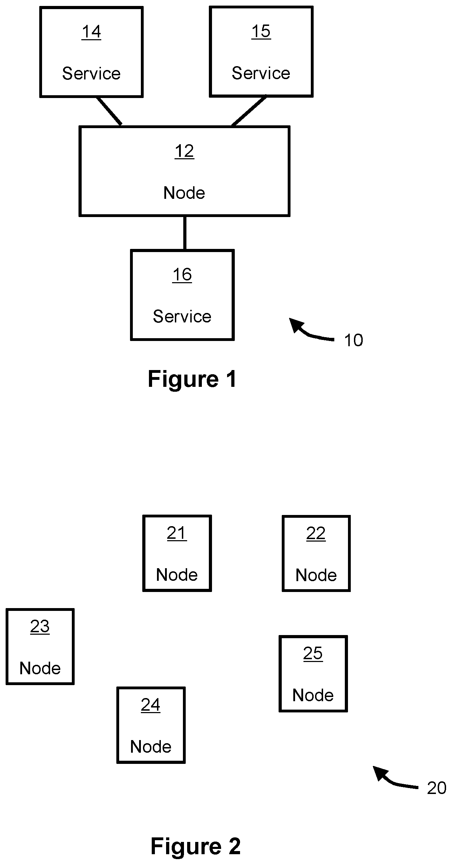

Figure 1 shows a block diagram of a communications node, indicated generally by the reference numeral 10, in accordance with an example embodiment. The communications node 10 comprises a node 12 and first, second and third services 14 to 16 that are accessible to the node 12. The node 12 may be an edge device of a communication system.

Each of the services 14 to 16 is configured to implement computation steps suitable for implementing a task (or part of a task). For example, services may provide image processing functionality, object detection functionality or other processing under the control of the node 12.

The node 12 may initiate and control one or more workflows. Each workflow comprises an ordered sequence of steps for processing, for example in the form of a directed acyclic graph (DAG). A workflow can be defined in a machine-readable format, such as a domain-specific language. The node 12 may use one or more of the services 14 to 16 to implement steps of the workflow.

Figure 2 shows a block diagram of a communications system, indicated generally by the reference numeral 20, in accordance with an example embodiment. The communications system 20 consists of a plurality of distributed nodes (specifically first, second, third, fourth and fifth nodes 21 to 25). Each of the distributed nodes 21 to 25 comprises a node such as the node 12 described above that has access to one or more services (such as the services 14 to 16 described above). The communication system 20 is sometimes referred to herein as a network.

The distributed nodes 21 to 25 are able to implement a workflow. In an example embodiment, the definition, selection and control of the workflow can be implemented at each of the plurality of nodes 21 to 25. Thus, the implementation of the workflow can be adjusted in response to the failure of one of the nodes, or the availability of a new node with new available services.

The communication system 20 may be a battlefield communication system, as discussed further below. For example, one or more of the nodes 21 to 25 may be implemented as part of a vehicle or as part of a user's equipment (such as a soldier's helmet or some other piece of equipment). However, the principles described herein are applicable to many other scenarios, particularly where fault-tolerance is desired.

Battlefield information processing and communication systems can be subject to DDIL (Denied, Disrupted, Intermittent and Limited) conditions. This may be due, at least in part, to a hostile or otherwise challenging environment in which the communication system is operating (such as the use of power-constrained nodes and/or low bandwidth or unreliable communications links). Alternatively, or in addition, DDIL conditions may be as a result of actions by an adversary (such as communications jamming). Such conditions may, for example, make it difficult to implement ISR (Intelligence, Surveillance and Reconnaissance) or C2 (command and control) applications.

The communication system 20 may be an ad hoc network, such as a MESH network. In particular, new nodes of the system 20 may become available and existing nodes of the system may be unavailable at certain times. For example, in a battlefield scenario, access to one or more of the nodes 21 to 25 may be blocked (e.g. jammed) by an adversary or may become unusable due to a reduction in the bandwidth available. Note that the example system 20 does not have a central controller. Rather, some or all of the nodes 21 to 25 have the capability to provide control functionality. Thus, control, decision-making and processing may be distributed amongst the node. The decentralised nature of the network may contribute towards providing a fault tolerant system.

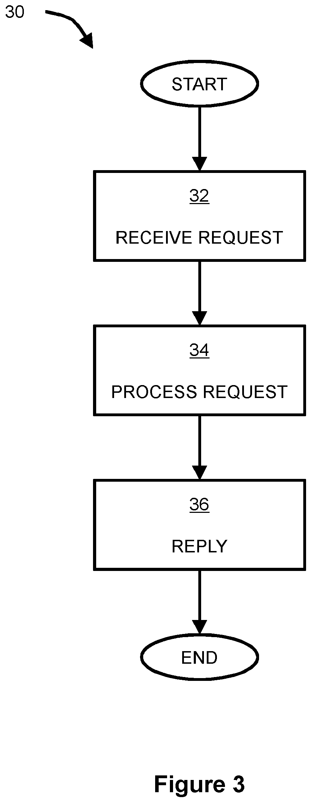

Figure 3 is a flow chart showing an algorithm, indicated generally by the reference numeral 30, in accordance with an example embodiment.

The algorithm 30 starts at operation 32, where a service request is received. When an action is required (as defined by the received service request), the relevant edge node initiates and controls a workflow process. A service discover procedure can implemented at the edge node. Service announcement and discovery may be implemented by each of number of different nodes (which nodes will form/have formed an ad-hoc network), often without requiring direct operator intervention.

At operation 34, a process request is made (for example by a node of a communication system). The process request may seek access to a service offered by the respective communication node, or by a different communication node.

At operation 36, a reply to the request received in the operation 32 may be provided. The reply may fulfil an operation requested in the operation 32.

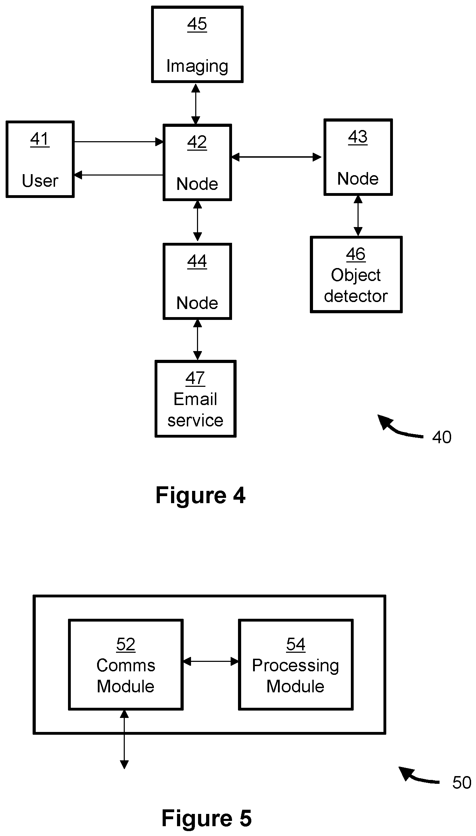

Figure 4 shows a block diagram of a communications system, indicated generally by the reference numeral 40, in accordance with an example embodiment.

The system 40 comprises a user 41 (such as a solider or a battlefield commander in the battlefield scenario discussed above). The system 40 further comprises a first node 42, a second node 43 and a third node 44 that collectively form a communication system (similar to the communication system 20 described above).

By way of example, in the communication system 40, the first node 42 has access to an imaging service 45, the second node has access to an object detection service 46 and the third node 44 has access to an email service 47.

Consider the following scenario in which the user 41 is an operational commander is a battlefield scenario. The operational commander 41 submits an ISR (Intelligence, Surveillance and Reconnaissance) request to the node 42 that incorporates a request for object detection within a geolocation boundary. The request is received at the first node 42 (thereby implementing operation 32 of the algorithm 30 described above).

The workflow request is provided as an ordered sequence of steps (e.g. a directed acyclic graph). The operational commander 41 does not need to identify the services that will be used (or their locations within the communication system) - only the functionality to be implemented. Indeed, the operational commander may not need to know or understand where or how such services can be delivered or which combination of services is currently best placed to implement the request (or is even available for use). In some example embodiments, the workflow definition itself may be generated by a natural language processor that generates a query from a natural language input provided by the operational commander.

In this example, the node 42 has access to the imaging service 45 and can therefore obtain images within the area defined by the geolocation instruction. The node 42 is also aware of the services offered by second and third nodes 43 and 44 (using a service discovery process discussed below). Thus, the first node 42 can instruct the second node 43 to use the object detection service 46 to identify objects within the image(s) obtained by the imaging service 45. The first node 42 can also instruct the third node 44 to use the email service 47 to generate a response that can be provided (by the first node 42) to the user 41. These instructions are example implementations of the operations 34 and 36 of the algorithm 30.

Thus, in the example scenario described above, the first node initiates and controls the workflows. However, in other scenarios, a different one of the nodes 41 to 43 could initiate and control a workflow. Indeed, multiple workflows could be in operation at the same time (controlled by any combination of the communication nodes).

The communications system 40 may be established and optimised without requiring direct operator intervention. The networks and workflows may be optimised on-the-fly, since network and node conditions can change significantly. This enables the workflow to be sustained (sustaining workflow may be more important than optimising workflow in challenging/fast changing conditions). Optimisation may be based on network conditions, node conditions (e.g. in response to jamming), processing requirements etc. This may be modified during workflow execution.

Figure 5 shows a block diagram of a communications node, indicated generally by the reference numeral 50, in accordance with an example embodiment. The communications node 50 comprises a communications module 52 and a processing module 54. The communications module 52 enables the node to communicate with other nodes of a communication system. The processing module 54 enables the node to implement functionality locally at the node.

The communications module 52 may provide an interface between the node 50 and one or more of the services available to the node (such as the imaging service 45 in the case of the first node 42 described above, the object detection service 46 in the case of the second node 43 described above, and the email service 47 in the case of the third node 44 described above).

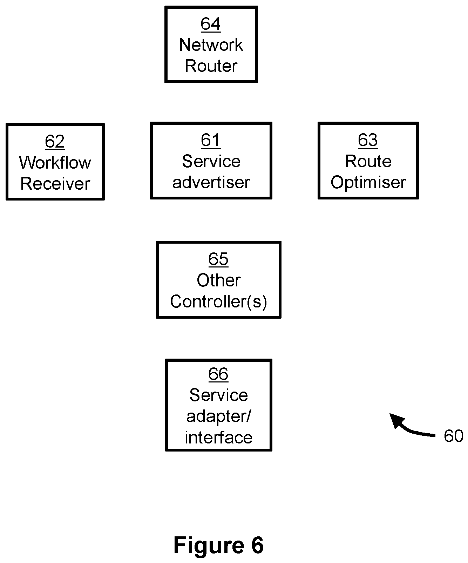

Figure 6 shows a block diagram of a communications node, indicated generally by the reference numeral 60, in accordance with an example embodiment. Each of the nodes 42 to 44 to the system 40 may, for example, take the form of the communications node 60 (or a variant thereof).

The communication node 60 comprises service advertiser module 61, a workflow receiver module 62, a route optimiser module 63, a network router module 64, one or more other controllers 65 and a service adapter (or interface) 66. The service adapter 66 provides an interface between the node 60 and the service(s) accessible to the node. Moreover, each node can announce the services that are available to that node. The services are then available for use by other nodes in the system.

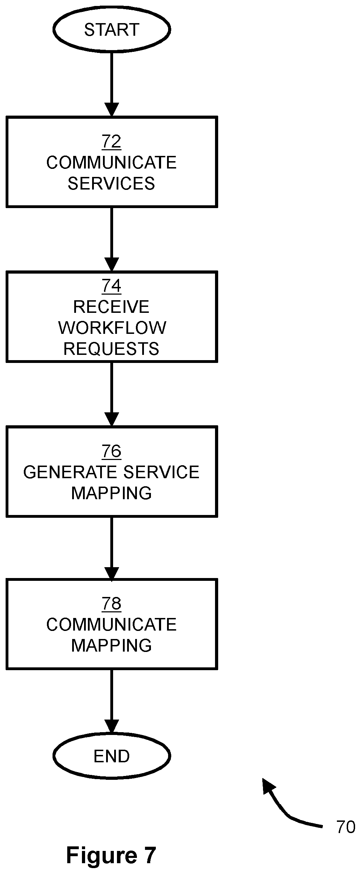

Figure 7 is a flow chart showing an algorithm, indicated generally by the reference numeral 70, in accordance with an example embodiment. The algorithm 70 may be implemented by the communication node 60 described above.

The algorithm 70 starts at operation 72, where the service advertiser module 61 communicates (to the relevant network) services that are available to the node 60. These may be the services that are available to the node 60 via the service adapter 66.

The service advertiser module 61 may additionally communicate properties or characteristics of the services that are available to the node. In some example embodiments, the service advertiser module 61 is configured to communicate information relating to the services that are available to the node together with another communication from the node to the network. This may be referred to as "trickle discovery". In this embodiment, information (e.g. about a new service that the node can access) is sent with a message that is already being sent for some other purpose (e.g. in reply to another message). This may improve efficiency and may be valuable in systems where bandwidth is low and/or unreliable.

At operation 74, the workflow receiver module 62 receives one or more workflow requests (workflows comprising an ordered sequence of steps for processing, as discussed above). The workflow receiver module 62 may "listen" for such workflow requests.

In the operation 74, a particular workflow request may be received from a user (such as the operational commander 41 in the example described above). In this scenario, the communication module 60 may initiate the workflow. Alternatively, or in addition, one or more workflow requests may be received from another communication node of the communication system.

At operation 76, the route optimiser module 63 generates a services mapping based in response to a workflow definition, wherein the services mapping is dependent on the services available on the nodes of the communication system. The route optimiser module 63 is provided as part of the communications node 60, rather than as part of a central control module, thereby aiding the resilient of a communication system involving multiple instances of the communication node 60.

At operation 78, the network router module 64 is configured to provide workflow activity messages to other nodes of the communication system across a network communications link, thereby communicating the mapping determined in the operation 76.

The adaptive nature of the algorithm 70 may enable workflows to be sustained without requiring direct operator intervention in the event of changes in the network, such as changes in node or service availability or edge node conditions (e.g. jamming of nodes). The algorithm 70 may enable automatic recovery (e.g. in the event of sudden loss of edge node processing capability).

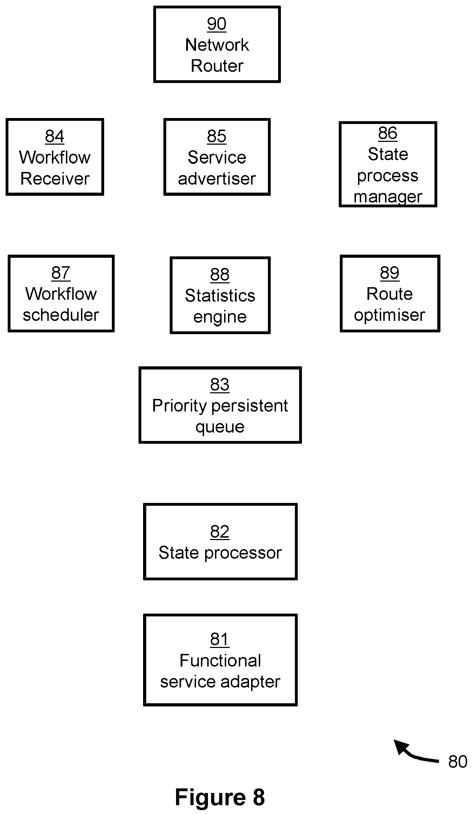

Figure 8 shows a block diagram of a communications node, indicated generally by the reference numeral 80, in accordance with an example embodiment. The communications node 80 has many similarities with the communications node 60 described above.

The communication node 80 comprises a functional service adapter module 81 (that is similar to the service adapter module 66 described above), a state processor 82, a priority persistent queue module 83, a workflow receiver module 84 (that is similar to the workflow receiver module 62 described above), a service advertiser module 85 (that is similar to the service advertiser module 61 described above), a state process manager 86, a workflow scheduler 87, a statistics engine 88, a route optimiser module 89 (that is similar to the route optimiser module 63 described above), and a network router module 90 (that is similar to the network route module 64 described above).

The state process manager 82 is configured to manage a state of each of one or more workflow messages being executed by the communication node 80. The messages may be handled in priority order.

The priority persistent queue module 83 may be provided to ensure that workflow activities or steps are processed in a priority order. Re-ordering may be also possible, for example if requirements or capabilities change. Priority setting on individual workflow activity messages may provide resource slicing capability by enabling the velocity of a workflow messages to be controlled. The velocity of message through and/or between nodes may be controlled in this manner.

The workflow scheduler 87 may define a start time and/or a repeat time of a workflow.

The statistics engine 88 may be provided to gather performance and/or usage statistics regarding said node and/or said communication system. The statistics may be used as metrics (e.g. performance metrics) for the node and/or the system. The route optimiser 89 may use the statistics generated by the statistics module 88 for route optimisation. For example, a machine learning algorithm may be implemented by the route optimiser that makes use of the generated statistics.

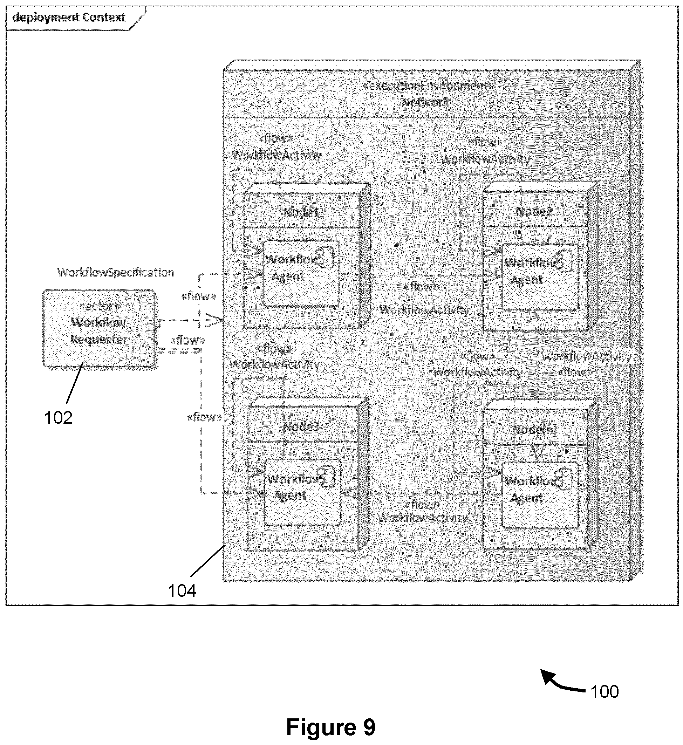

Figure 9 shows a block diagram of a communications system, indicated generally by the reference numeral 100, in accordance with an example embodiment. The communication system 100 has many similarities with the system 40 described above.

The system 100 comprises a workflow requester 102 (that may be the user 41 described above) and a network 104. The network 104 includes a plurality of nodes (similar to the nodes 42 to 44 described above). As shown in Figure 9, the example network 104 includes Node 1, Node 2, Node 3 and one or more further nodes Node(n). Of course, a particular network may comprise any number of nodes. Each node includes a workflow agent.

The workflow agents can be considered to be the core functional component of each node that can participate in workflows and act as an intermediary between workflow requests, inter node workflow activity messages (via a workflow activity queue) and the workflow state processor. Each workflow agent invokes services local to the respective node via workflow functions.

Some of the terminology relating to workflows as used herein is defined below:
- Workflow Specification: The specification of a given directed acyclic graph (DAG) or ordered sequences of workflow states (steps) to achieve a desired information processing outcome. The workflow specification may start off describing requires services and workflow states only, and therefore require further composition by the workflow agent before being instantiated and run.
- Workflow Instance: An instantiation of a single workflow specification at runtime, executing the workflow specification as a series of individual workflow activity messages that are passed between, and processed on, nodes (such as the nodes shown in Figure 9) by the workflow agent.
- Workflow State: A step in a workflow.
- Workflow Action: A sub-step of a workflow state that can typically only be executed on the node (rather than being distributed across nodes).
- Workflow Commands: Utilities to interrogate and query workflow agents and submit a workflow request message to workflow agents. Example commands include: Workflow Request, Workflow Instance Status Query, Node/Service Query, Workflow Instance Cancel etc.
- Workflow Request: A message sent to workflow agents to instantiate and execute the workflow specification.
- Workflow Function: Interface and functionality to allow the workflow state processor to communicate and invoke service requests on the local node. Workflow functions may be called from workflow actions.
- Workflow Activity: The individual instance of a workflow state and data as it progresses through a workflow Instance. A workflow activity may comprise the unique identifier of the workflow and workflow instance, the current / next workflow state and state type, the priority and the workflow data. Workflow activity messages may be transmitted intra node during workflow instance execution.
- Workflow Data (Payload): The data/payload throughout the workflow instance execution. Special types of workflow states may be capable of filtering the data based on conditions. Workflow data is a property of a workflow activity message.
- Workflow Receiver: Subsystem component of the workflow agent. The workflow receiver monitors workflow requests on the network and may determine whether the current node is the start node.
- Workflow Activity Queue: Subsystem component of the workflow agent. Priority persistent queue of workflow activity messages to be processed by the workflow state processor. Priority settings on individual workflow activity message may provide resource slicing capability by throttling the velocity of workflow activity message intra- and inter-node.
- Workflow State Processor: Subsystem component of the workflow agent. Examines the workflow activity queue to process a workflow activity. Workflow state processes can be configured to run in parallel to enable more throughput and counter workflow states or services which may be long running and, thus, block subsequent workflow activity processing.
- Workflow Network Router Queue: Subsystem component of the workflow agent. Priority persistent queue of workflow activity messages to be processed by the workflow network router and dispatched to another node.
- Workflow Network Router: Subsystem component of the workflow agent. The workflow network router examines the workflow network router queue to forward workflow activity messages to nodes across the network. This component may perform the functionality to support DDIL, including exponential back-off retry and timeout, ordered alternate node and node link routes and service discovery and workflow optimiser. Where network services can use UDPLink services, such as 5G QoS etc., the workflow network router may make use of these.
- Workflow Optimiser: Subsystem component of the workflow agent. The workflow optimiser takes a list of services, nodes and network links and their associated attributes, assuming that any service may be available on more than one node and more than one network links are available. Performs one or more algorithms that seek to determine the optimum route of nodes and network links utilising one or more cost functions.
- Workflow Scheduler: Subsystem component of the workflow agent. The workflow scheduler allows a workflow instance to be executed on a repeating scheduled basis, for example every 5 minutes, every day at 8.00am etc.
- Workflow Agent Statistic Engine: Subsystem component of the workflow agent. Collects statistics from both workflow agent subsystems, the local node and network interfaces. Can be used to support calculations and algorithms invoked in the workflow optimiser subsystem.
- Workflow Registry: Subsystem component of the workflow agent. A local database/cache of known workflow specifications. May be received as part of a workflow request.

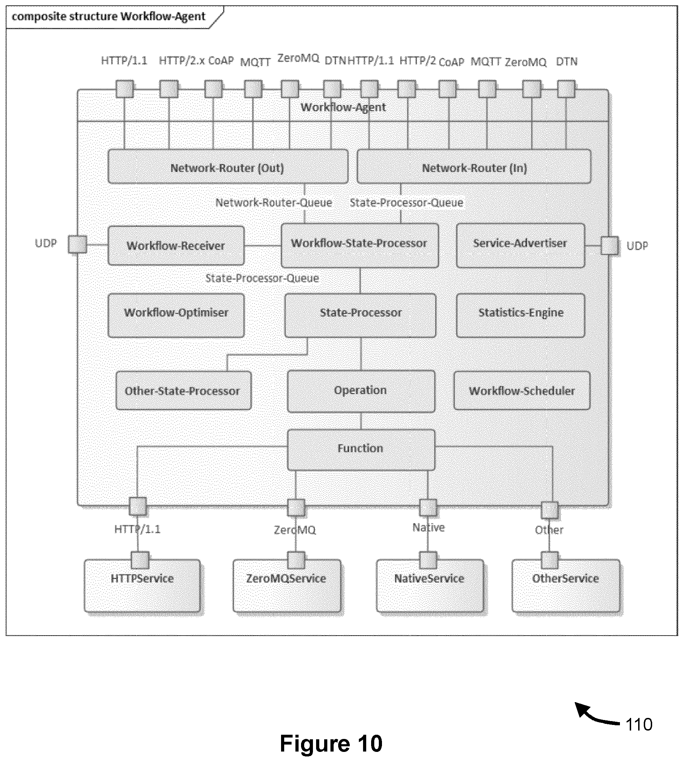

Figure 10 shows a block diagram of a communications node, indicated generally by the reference numeral 110, in accordance with an example embodiment. The communication node 110 has many similarities with the communication node 80 described above. The communication node may be used to implement each of the workflow agents of the communication system 100 described above.

The communication node 110 has a Function block that is similar to the functional service adaptor 81 described above. The Function block provides an interface layer to access functional services. The Function block may support "in process" and "out of process" calls and protocols.

The communication nodes 110 has an Operation block, a State Processor block, a workflow state processor block and an other-state-processor block that may collectively implement features of the state processor 82 described above.

The Operation block is a type of state processor that executes one or more actions (in parallel or in sequence), for example invoking one or more services via the Function block.

The Workflow state processor block manages the application states of API messaging during messaging operations. These may be classed into different types of workflow functions, such as "Start", "Inject", "Operation", "Switch", etc.

The other-state-processor may be an abstract service representing other types of workflow state processors. Examples include "Inject" (inject static data), "Switch" (defining data-based or event-based workflow state transitions), "ForEach" (parallel execution of states for each element of a data array), etc.

The communication node 110 has a Workflow Receiver block that is similar to the workflow receiver module 84 described above. The Workflow Receiver block listens for workflow requests on the network (e.g. via UDP multicast messages). Workflows may be encoded to the Cloud Native Computing Foundation (CNCF) serverless workflow standard serialised as YAML or JSON may be supported.

The communication node 110 has a Service Advertiser block that is similar to the service advertiser module 85 described above. The Service Advertise block responds to service discovery requests for information of services available on the node, for example over a multi-cast based discovery protocol such as mDNS, DNS-SD, Simple Discovery Protocol (SSDP) or a bespoke discovery protocol optimised for the Workflow Agent. The Service Advertiser block may provide information on both services, node and workflow status.

The communication node 110 has a Workflow Scheduler block that is similar to the workflow scheduler module 87 described above. The Workflow Scheduler block supporting running workflow instances on a repeating scheduled basis (e.g. every 5 minutes, etc.).

The communication node 110 has a Statistics Engine block that is similar to the statistic engine module 88 described above. The Statistics Engine block may capture statistics from the node (e.g. CPU/memory etc.), node network interface (e.g. bytes/sec, dropped packets, etc.), and the workflow agent itself (e.g. workflow/state transition duration times, node retries, etc.). The statistics engines is a potential data source for training AI/ML models to enhance the capability and behaviour of a route optimiser graph auction service.

The communication node 110 has a Workflow Optimiser block that is similar to the route optimiser module 89 described above. Given a series of services, nodes and their current properties and cost functions, the Workflow Optimiser block returns an estimate of an optimum workflow route. This could take advantage of AI/ML techniques based on data (e.g. training data) obtained by the Statistics Engine block over time (as noted above).

The communication node 110 has a Network-Router (In) block and a Network-Route (Out) block that are similar to the Network router module 90 described above. These blocks route workflow activity messages to nodes via a network protocol. Protocol options includes HTTP, CoAP, MQTT, ZeroMQ, UDP, Delay Tolerant Network (DRN); the skilled person will be aware of other options. The choice of network may be both pluggable and adaptable. The network route blocks may support multiple priority routing for nodes and exponential back-off retry algorithms, for example.

The communication node 110 has a network-route queue that is provided to dispatch workflow activity messages for onward routing to another node (e.g. via the Network Route (Out) block). Priority attributes may provide resource slicing capability through limiting workflow message velocity through the workflow agent.

Similarly, the communication node 110 has a state processor queue that manages workflow activity messages from processing at the node. Again, priority attributes may provide resource slicing capability through limiting workflow activity message velocity through the workflow agent.

The invention is not limited to military applications. For example, nodes may be distributed in an IoT system, which could have a communications network as defined herein.

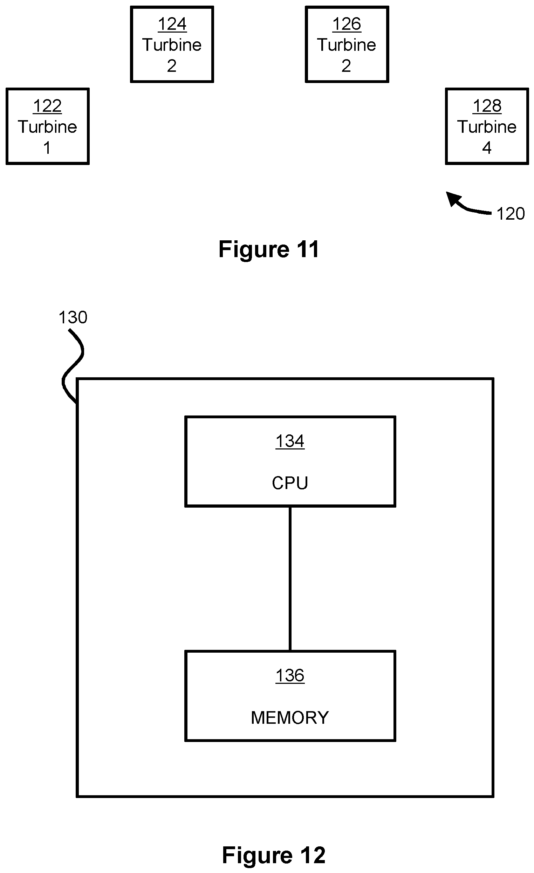

Figure 11 shows a block diagram of a system, indicated generally by the reference numeral 120, in accordance with an example embodiment. The system 120 comprises a plurality of wind turbines. Specifically, a first wind turbine 122, a second wind turbine 124, a third wind turbine 126 and a fourth wind turbine 128 are shown (although, of course, many more wind turbines may be provided in the system 120). Each wind turbine may have a communication node (such as the communication nodes 60, 80 or 110 described above). The communication nodes may be used to implement various functionality relating to the operation and control of the system 120. The nodes may form a communication network in which at least some of the links of the network are unreliable (e.g. due to the distances between the nodes, or due to potentially harsh environmental conditions). The principles described herein can be used to provide a communication system that can be reconfigured on-the-fly, for example without requiring human operator intervention.

Figure 12 shows a memory 136 and processor 134 that can be used in implementations of example embodiments. The processor 134 may store a computer program for implementing aspects of one or more of the algorithms described herein (such as the algorithm 30 or the algorithm 70 described above).

Embodiments of the components described herein can be implemented using any suitable software applications, programming language, data editors, etc., and may be represented/stored/processed using any suitable data structures, and so on.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A node of a communication system, wherein the node is configured to initiate and control one or more workflows, wherein the communication system comprises a plurality of nodes for implementing said workflows, said node comprising:
a service advertiser module for communicating, to the network, services that are available to the node, where each service is configured to implement computation steps suitable for implementing a task;
a workflow receiver module for receiving one or more workflow requests, wherein each workflow comprises an ordered sequence of steps for processing;
a route optimiser configured to generate a services mapping based in response to a workflow definition, wherein the services mapping is dependent on the services available on the nodes of the communication system; and
a network router configured to provide workflow activity messages to other nodes of the communication system across a network communications link.

2. The node according to claim 1, further comprising an interface between the node and one or more of the services available to the node.

3. The node according to claim 1 or claim 2, wherein the workflow receiver module is configured to receive one or more workflow requests from a user.

4. The node according to any one of claims 1 to 3, wherein the workflow receiver module is configured to receive one or more workflow requests communicated by other nodes of the communication system.

5. The node according to any one of the preceding claims, wherein the service advertiser module additionally communicates properties or characteristics of the services that are available to the node.

6. The node according to any one of the preceding claims, wherein said service advertiser module is configured to communicate information relating to the services that are available to the node together with another communication from the node to the network.

7. The node according to any one of the preceding claims, further comprising a state process manager configured to manage a state of each of one or more workflow messages being executed by the node, wherein said messages are handled in priority order.

8. The node according to any one of the preceding claims, further comprising a workflow scheduler, wherein said workflow defines a start time and/or a repeat time of a workflow.

9. The node according to any one of the preceding claims, further comprising a statistics engine for gathering performance and/or usage statistics regarding said node and/or said communication system.

10. The node as claimed in claim 9, wherein said route optimiser uses said statistics.

11. The node according to any one of the preceding claims, wherein said node is an edge device of the communication system.

12. The node according to any one of the preceding claims, wherein the network is an ad-hoc network.

13. A communication system comprising a plurality of nodes as claimed in any one of the preceding claims.

14. A method comprising:
receiving one or more workflow requests at a node of a communication system, wherein the node is configured to initiate and control one or more workflows, wherein the communication system comprising a plurality of nodes for implementing said workflows, and wherein each workflow comprises an ordered sequence of steps for processing;
communicating, to the network, services that are available to the node, where each service is configured to implement computation steps suitable for implementing a task;
generating a services mapping in response to a workflow definition, wherein the services mapping is dependent on the services available on the nodes of the communication system; and
providing workflow activity messages to other nodes of the communication system across a network communications link.

15. A computer program comprising instructions which, when the program is executed by a computer, causes the computer to:
receive one or more workflow requests at a node of a communication system, wherein the node is configured to initiate and control one or more workflows, wherein the communication system comprising a plurality of nodes for implementing said workflows, and wherein each workflow comprises an ordered sequence of steps for processing;
communicate, to the network, services that are available to the node, where each service is configured to implement computation steps suitable for implementing a task;
generate a services mapping in response to a workflow definition, wherein the services mapping is dependent on the services available on the nodes of the communication system; and
provide workflow activity messages to other nodes of the communication system across a network communications link.
